# EUROPÄISCHE PATENTSCHRIFT

(11) **EP 3 588 184 B1**
(45) Veröffentlichungstag und Bekanntmachung des Hinweises auf die Patenterteilung: **01.06.2022**
(21) Anmeldenummer: 18180436.0
(22) Anmeldetag: 28.06.2018
(51) Int. Cl.: G02F 1/35, H05B 3/20

(54) **HEIZVORRICHTUNG FÜR EINEN OPTISCHEN KRISTALL**
HEATING DEVICE FOR AN OPTICAL CRYSTAL
DISPOSITIF DE CHAUFFAGE POUR UN CRISTAL OPTIQUE

(43) Veröffentlichungstag der Anmeldung: 01.01.2020
(73) Patentinhaber: TRUMPF Schweiz AG, 7214 Grüsch (CH)
(72) Erfinder: BÜCHE, Dirk, 7215 Fanas (CH); JANKI, Sandro, 7270 Davos Platz (CH)
(74) Vertreter: Kohler Schmid Möbus Patentanwälte

(56) Entgegenhaltungen:
- WO-A1-2017/062501
- WO-A1-2017/116437
- US-A- 6 002 697
- US-A1- 2005 225 837

## Beschreibung

Die Erfindung betrifft eine Vorrichtung zum Heizen eines optischen Kristalls gemäß dem Oberbegriff von Anspruch 1.

Eine derartige Heizvorrichtung ist beispielsweise durch die WO 2017/062501 A1 bekannt geworden.

Nichtlineare Kristalle werden zur Frequenzkonversion verwendet und sind oft in einem Gehäuse untergebracht, um möglichst eine homogene Temperaturverteilung zu erreichen. Die Kristalle haben meist eine erhöhte Betriebstemperatur zwischen ca. 50 °C und 200 °C, die sehr konstant gehalten werden muss. Bei diesen Temperaturen ist die Tendenz groß, dass die verwendeten Kunststoffe, Kabel und deren Lötverbindungen ausgasen und damit die Lebensdauer der Kristalle herabsetzen und zum Ausfall führen.

Die aus der eingangs genannten WO 2017/062501 A1 bekannte Heizvorrichtung umfasst ein nichtlineares Kristallelement, das mittels eines Vergussmaterials an einem Kristallhalter angebracht ist. Der Kristallhalter weist ein Thermoelement, das am Boden des Kristallhalters mittels eines Epoxidharzes angebracht ist, und einen Wärmesensor auf, der an der Seite des Kristallhalters mittels eines Epoxidharzes angebracht ist. Der Wärmesensor misst die Temperatur des Kristallhalters und dadurch die ungefähre Temperatur des nichtlinearen Kristallelements. Das nichtlineare Kristallelement, der Kristallhalter, der Wärmesensor und das Wärmeelement sind zwischen einem isolierenden Wärmemanteloberteil und einem Wärmemantelunterteil montiert.

Aus US 6 002 697 A ist weiter ein Gehäuse zum Halten eines nichtlinearen Kristalls bekannt, der in einem Metallhalter montiert ist. Der Metallhalter ist an einer Heizeinrichtung befestigt, die an einem Gehäusedeckel angebracht ist. Ein Temperatursensor ist an dem Metallhalter angebracht, um die Temperatur des Kristalls zu überwachen.

Aus der EP 1 048 974 A1 ist noch eine Heizvorrichtung bekannt, bei der ein optischer Kristall in einem Aluminiumhalter mittels einer Blattfeder festgeklemmt ist. Der Aluminiumhalter ist mittels O-Ringen in einem Spulenkörper aus reinem Aluminium angeordnet, um den eine Heizspule und ein Thermoelement gewickelt sind. Ein- und Austrittsöffnungen für einen Laserstrahl sind durch Keramikflansche gebildet. Der Spulenkörper samt den Keramikflanschen und einer die Heizspule umgebenden Wärmeisolierung ist wiederum in einem Keramikgehäuse untergebracht.

Demgegenüber ist es die Aufgabe der vorliegenden Erfindung, bei einer Heizvorrichtung der eingangs genannten Art den Aufbau zu vereinfachen und die Anzahl der Einzelteile zu reduzieren. Insbesondere soll die Heizvorrichtung ohne Kunststoffe, Kabel und - insbesondere ausgasende - Lötverbindungen auskommen.

Diese Aufgabe wird erfindungsgemäß durch eine Heizplatte mit den Merkmalen von Anspruch 1 gelöst.

Erfindungsgemäß besteht die Heizvorrichtung aus wenigen Teilen. Die Heizplatte bildet vorzugsweise einen Deckel, der gleichzeitig die Heizung sowie einen Temperatursensor beinhaltet. Alternativ kann die Heizplatte auch mehrteilig ausgebildet sein, wobei ein erster Teil die mindestens eine Heizfläche und ein zweiter Teil die Sensorfläche aufweist und wobei der erste Teil an einer Seite des Gehäuses und der zweite Teil insbesondere an einer anderen Seite des Gehäuses angeordnet ist. Die Heizfläche oder -flächen liegen nur am Gehäuse, nicht aber am Kristall an, um den Kristall indirekt zu heizen. Das Gehäuse sorgt für Unempfindlichkeit gegenüber äußeren Einflüssen.

Vorzugsweise sind die freiliegenden Heizflächen punktsymmetrisch außen um die Sensorfläche herum oder seitlich der Sensorfläche angeordnet.

In einer bevorzugten Ausführungsform ist der Innenraum zu der Heizplatte hin offen, so dass der Kristall direkt an der Sensorfläche anliegt und die Kristalltemperatur unmittelbar gemessen wird. In einer anderen bevorzugten Ausführungsform liegt das Gehäuse mit einer Gehäuseplatte an der Heizplatte an, so dass die Kristalltemperatur nur noch mittelbar über die Temperatur der Gehäuseplatte gemessen wird. Die Gehäuseplatte dient zur räumlichen Homogenisierung der zugeführten Wärme und als Wärmepuffer. Die Gehäuseplatte kann als eine separate Platte oder als eine am Gehäuse einstückig angeformte Gehäusedecke ausgeführt sein. Sie begrenzt insbesondere den Innenraum zwischen den beiden seitlichen Zugangsöffnungen.

Die Halterung des Kristalls im Gehäuse erfolgt vorzugsweise durch mindestens ein Federelement, das den Kristall gegen die Heizplatte und somit gegen den Temperatursensor, oder gegen die Gehäuseplatte drückt. Das Federelement kann an einem Gehäuseboden abgestützt sein.

Bei einer alternativen bevorzugten Ausführungsform liegt das Gehäuse mit dem Gehäuseboden an der Heizplatte an, so dass die Kristalltemperatur mittelbar über die Temperatur des Gehäusebodens gemessen wird. Der Gehäuseboden dient zur räumlichen Homogenisierung der zugeführten Wärme und als Wärmepuffer. Der Gehäuseboden liegt insbesondere entgegengesetzt zu einer Öffnung, die sich zwischen den beiden seitlichen Zugangsöffnungen erstreckt, beziehungsweise zu der Gehäuseplatte. Die Halterung des Kristalls im Gehäuse erfolgt vorzugsweise durch mindestens ein Federelement, das den Kristall gegen den Gehäuseboden drückt. Das Federelement kann an der Gehäuseplatte abgestützt sein.

Alternativ zu dem Federelement kann eine Klebeverbindung oder eine, insbesondere nicht ausgasende, Lötverbindung vorgesehen sein, welche den Kristall, in Abhängigkeit von der Positionierung der Heizplatte beziehungsweise der Sensorfläche, in Anlage an der Heizplatte, der Gehäuseplatte beziehungsweise dem Gehäuseboden fixiert.

Vorteilhaft sind die einzelnen Bauteile der Heizvorrichtung miteinander verschraubt. So kann die Heizplatte an das Gehäuse angeschraubt sein, welches wiederum an ein Basiselement angeschraubt ist, so dass das Gehäuse zwischen der Heizplatte und dem Basiselement angeordnet ist. Alternativ kann die Heizplatte auch zwischen dem Gehäuse und dem Basiselement angeordnet sein, insbesondere wenn das Gehäuse mit dem Gehäuseboden an der Heizplatte anliegt.

In einer besonders bevorzugten Ausführungsform der Erfindung weist die Heizplatte einen außerhalb des Innenraums angeordneten, insbesondere seitlich über das Gehäuse vorstehenden, Plattenabschnitt mit freiliegenden Kontaktflächen auf, welche mit der mindestens einen Heizfläche und der Sensorfläche elektrisch leitend verbunden sind und deren Anschlüsse bilden. Dadurch können möglicherweise auftretende Ausgasungen an einer elektrischen Anbindung der Kontaktflächen nicht in den Innenraum eindringen und den Kristall schädigen.

Für eine beidseitige Wärmezufuhr in das Gehäuse liegt an einer der Heizplatte gegenüberliegenden Gehäuseseite bevorzugt eine weitere, zweite Heizplatte an, die mindestens eine freiliegende Heizfläche zur unmittelbaren Anlage an dem Gehäuse und zugehörige freiliegende Kontaktflächen aufweist. Im Gegensatz zur ersten Heizplatte hat die zweite Heizplatte insbesondere nur Heizfunktion, da zur Regelung einer Temperatur des Kristalls eine Sensorfläche in der ersten Heizplatte ausreichend ist.

Besonders bevorzugt sind die freiliegenden Kontaktflächen der ersten und/oder zweiten Heizplatte von Federkontakten, welche anderenends an einem Gegenlager abgestützt sind, elektrisch kontaktiert. Ein solches Gegenlager ist vorzugsweise eine Platine, welche beispielsweise an dem Gehäuse oder dem Basiselement angeordnet ist. Bei Anordnung zweier Heizplatten können die Federkontakte für die eine Heizplatte beispielsweise durch Löcher der anderen Heizplatte hindurch bis zu dem Gegenlager geführt sein. Das Gegenlager befindet sich insbesondere außerhalb des Optikbereichs. Die Federkontakte sind insbesondere außerhalb des Innenraums angeordnet, wobei sie innerhalb oder außerhalb des Gehäuses angeordnet sein können. Durch die Federkontakte sind im Optikbereich weder Kabel oder Kunststoffe, die ausgasen und dadurch die Lebensdauer der Kristalle herabsetzen und zum Ausfall führen könnten, noch Lötverbindungen zu deren Befestigung erforderlich.

Vorzugsweise sind die mindestens eine Heizfläche und/oder die Sensorfläche und/oder die freiliegenden Kontaktflächen auf der Plattenseite aufgedampft oder z.B. in Dickschichttechnik aufgedruckt.

Vorteilhaft können in dem Innenraum auch mehrere optische Kristalle angeordnet sein, und zwar entweder hintereinander, um dadurch eine kaskadierte Frequenzkonversion der Laserwellenlänge zu erreichen, oder nebeneinander für die Frequenzkonversion unterschiedlicher Laserstrahlen.

Bevorzugt weist die Vorrichtung eine Außenhülle auf, die das Gehäuse zur thermischen Isolierung gegenüber der Umgebung der Vorrichtung umhüllt. Eine solche Außenhülle kann beispielsweise aus Aluminium ausgebildet sein. Eine Verlustleistung der Vorrichtung, die insbesondere bei Betriebstemperaturen ab etwa 160 °C deutlich zunimmt, kann hiermit deutlich reduziert werden.

Die Erfindung betrifft auch eine Anordnung mit mehreren im Strahlengang eines Laserstrahls hintereinander angeordneten, wie oben ausgebildeten Heizvorrichtungen, um so eine kaskadierte Frequenzkonversion der Laserwellenlänge zu erreichen. Die Temperaturen der Kristalle in den einzelnen Heizvorrichtungen können auf die gleiche oder unterschiedliche Betriebstemperaturen eingestellt werden.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fign. 1a, 1b: eine erste Ausführungsform der erfindungsgemäßen Heizvorrichtung mit einer Heizplatte, die in Fig. 1b transparent dargestellt ist, jeweils in einer perspektivischen Ansicht;
- Fig. 2: die Unteransicht der in Fig. 1 gezeigten Heizplatte; und
- Fign. 3a, 3b: eine zweite Ausführungsform der erfindungsgemäßen Heizvorrichtung mit einer weiteren Heizplatte in einer perspektivischen Ansicht (Fig. 3a) und in einer Schnittansicht (Fig. 3b).

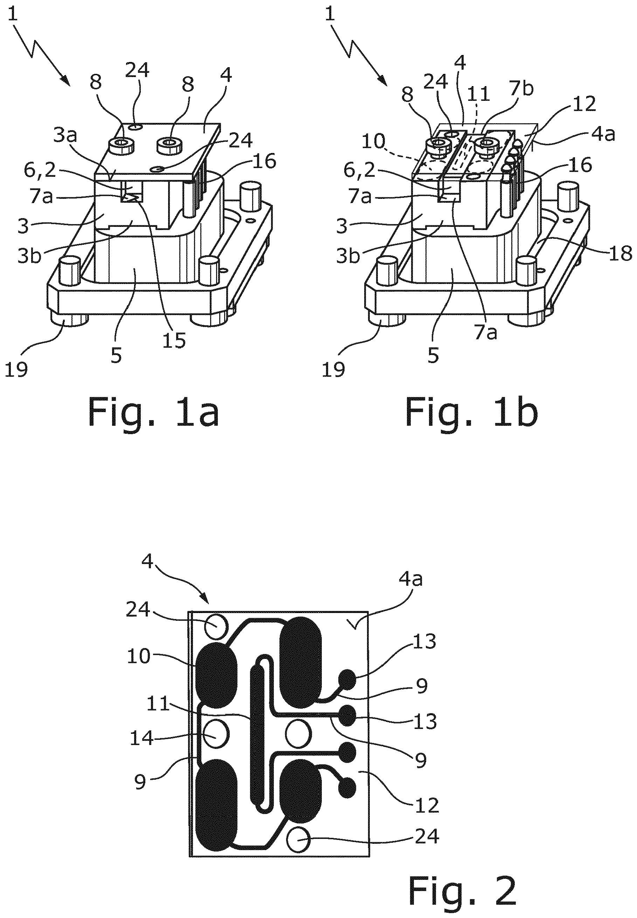

Die in **Fign. 1a, 1b** gezeigte Heizvorrichtung (Ofen) **1** dient zum Heizen eines z.B. zur Frequenzkonversion verwendeten, nichtlinearen Kristalls **2**, der auf einer konstanten Betriebstemperatur zwischen ca. 50 °C und 200 °C gehalten werden soll und eine möglichst homogene Temperaturverteilung aufweisen soll. Die Heizvorrichtung 1 umfasst ein Gehäuse **3** sowie eine Heizplatte **4** und ein sockelförmiges Basiselement **5**, zwischen denen das Gehäuse 3 angeordnet ist.

Das Gehäuse 3 ist einstückig aus wärmeleitendem Material, wie z.B. Metall oder Keramik, gebildet und weist einen zur Heizplatte 4 hin offenen Innenraum **6**, in dem der Kristall 2 angeordnet ist, und zwei einander gegenüberliegende, seitliche Zugangsöffnungen **7a**, **7b** zu dem Innenraum 6 auf. Die beiden Zugangsöffnungen 7a, 7b dienen als Eintritts- und Austrittsöffnungen für einen Laserstrahl.

Die Heizplatte 4 liegt mit ihrer Plattenunterseite **4a** an der Gehäuseoberseite **3a** an und ist mit zwei Schrauben **8** an das Gehäuse 3 angeschraubt. Die Heizplatte 6 ist aus elektrisch isolierendem Material, wie z.B. aus Keramik (Al₂O₃), und trägt, wie in **Fig. 2** gezeigt, an der Plattenunterseite 4a sowohl vier über Leiterbahnen **9** in Reihe geschaltete freiliegende Heizflächen **10** als auch eine freiliegende Sensorfläche **11** eines thermischen Sensors, beispielsweise eines Thermoelements (z.B. NTC-Thermistor). Die großflächigen Heizflächen 10 sind außen um die kleinflächige Sensorfläche 11 herum punktsymmetrisch angeordnet und liegen direkt am Gehäuse 3 an. Die Heizflächen 10 können auch seitlich der Sensorfläche 11 angeordnet sein. Insbesondere sind Größe und/oder Form der Sensorfläche 11 auf eine der Heizplatte 4 zugewandte Oberfläche des Kristalls 2 und/oder einen möglichen Lagebereich des Kristalls 2 innerhalb des Innenraums 6 angepasst. Weiterhin sind Größe und/oder Form der Heizflächen 10 an die Gehäuseoberseite 3a angepasst, so dass eine möglichst gleichmäßige beziehungsweise großfläche Wärmeeinleitung in das Gehäuse 3 möglich ist. Die Sensorfläche 11 befindet sich über dem Innenraum 6 und steht in unmittelbarem thermischem Kontakt mit dem Kristall 2. Die Heizplatte 4 überdeckt die Gehäuseoberseite 3a vollständig und weist einen außerhalb des Innenraums 6 angeordneten, seitlich über das Gehäuse 3 vorstehenden Plattenabschnitt **12** mit vier unterseitig freiliegenden Kontaktflächen **13** auf, welche die Anschlusskontakte für die Heiz- und Sensorflächen 10, 11 bilden und mit diesen über Leiterbahnen 9 elektrisch leitend verbunden sind. Die Leiterbahnen 9 und die Heiz- und Sensorflächen 10, 11 sind auf der Plattenunterseite 4a beispielsweise aufgedampft oder in Dickschichttechnik aufgedruckt. Die Durchgangslöcher in der Heizplatte 4 für die beiden Schrauben 8 sind mit **14** bezeichnet.

Das Basiselement 5 ist aus elektrisch isolierendem Material, wie z.B. aus Kunststoff (PEEK) oder Keramik, und weist mehrere Durchgangslöcher (nicht gezeigt) für Schrauben auf, mit denen das Gehäuse 3 an das Basiselement 5 angeschraubt ist.

Der Kristall 2 ist im Innenraum 6 mit Spiel zu den Gehäuseinnenwänden angeordnet und in Anlage an die Heizplatte 4, also insbesondere in Anlage an die Sensorfläche 11, mittels eines lediglich schematisch angedeuteten Federelements (z.B. Blattfeder, die sich beispielsweise gegen den Kristall 2 wölbt, oder Spiralfeder, die beispielsweise in einer Sackbohrung des Gehäuses 3 angeordnet ist) **15** gedrückt, das im Innenraum 6 angeordnet ist. Das Gehäuse 3 weist einen Gehäuseboden **3b** auf, an dem das Federelement 15 abgestützt ist. Alternativ kann der Kristall 2 auch in analoger Weise positioniert und mittels Kleben oder ausgasungsfreiem Löten in dem Innenraum 6 befestigt sein.

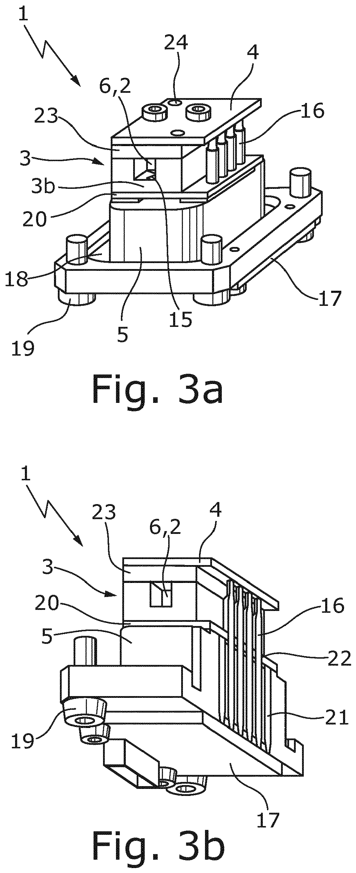

Die vier Kontaktflächen 13 sind von stiftförmigen Federkontakten **16** elektrisch kontaktiert, die an einem Gegenlager in Form einer Platine **17** (Fig. 3) abgestützt und jeweils mit Federvorspannung an die Kontaktflächen 13 angedrückt sind. Die Federkontakte 16 sind aus elektrisch leitendem Material, wie z.B. aus Metall, und dienen dazu, den Anpressdruck bereitzustellen und Unebenheiten der Plattenunterseite 4a auszugleichen.

Die Sensorfläche 11 liegt unmittelbar an dem Kristall 2 an, und das gemessene Temperatursignal der Sensorfläche 11, welches von der Temperatur des Kristalls 2 abhängt, wird über die zugeordneten Federkontakte 16 an eine der Platine 17 zugeordnete Steuereinheit geleitet, die wiederum die Heizflächen 10 über die zugeordneten Federkontakte 16 elektrisch ansteuert, damit sich am Kristall 2 eine gewünschte Betriebstemperatur einstellt. Die Heizflächen 10 heizen das Gehäuse 3 und damit über den Innenraum 6 indirekt den Kristall 2. Der Temperaturgradient im Kristall 2 ist so möglichst gering und unabhängig von der Umgebungstemperatur.

Die Zugangsöffnungen 7a, 7b befinden sich in einem sauberen Optikbereich, wohingegen die Federkontakte 16 außerhalb dieses Optikbereichs angeordnet sind. Das Basiselement 5 weist noch eine umlaufende Nut **18** für einen Dichtring (nicht gezeigt) auf, um das Basiselement 5 bzw. die Heizvorrichtung 1 abgedichtet an einer weiteren Baugruppe mittels mehrerer Schrauben **19** zu befestigen.

Von der Heizvorrichtung der Fig. 1 unterscheidet sich die in **Fign. 3a**, **3b** gezeigte Heizvorrichtung 1 dadurch, dass für eine beidseitige Wärmezufuhr hier zwischen Gehäuse 3 und Basiselement 5 eine weitere, zweite Heizplatte **20** angeordnet ist. Die zweite Heizplatte 20 weist analog zu der ersten Heizplatte 4 vier oberseitig freiliegende Heizflächen, die direkt am Gehäuse 3 anliegen, und zwei zugehörige unterseitig freiliegende Kontaktflächen auf, welche mit diesen Heizflächen elektrisch leitend verbunden sind. Alternativ können auch, insbesondere je nach Lage der Schrauben 8, zwei oder eine andere Zahl an Heizflächen vorgesehen sein. Dazu ist eine Durchkontaktierung der zweiten Heizplatte 20 vorgesehen. Diese Kontaktflächen sind von zwei stiftförmigen Federkontakten **21** elektrisch kontaktiert, die ebenfalls an der Platine 17 abgestützt und jeweils mit Federvorspannung an die beiden Kontaktflächen angedrückt sind. Die vier stiftförmigen Federkontakte 16 sind durch Löcher **22** der zweiten Heizplatte 20 hindurch bis zu der Platine 17 geführt.

Alternativ können die zwei Kontaktflächen an der zweiten Heizplatte 20 oberseitig angeordnet sein, wobei diese Kontaktflächen von zwei stiftförmigen Federkontakten, welche an der ersten Heizplatte 4 abgestützt sind, elektrisch kontaktiert sind. Diese zwei Kontaktflächen sind insbesondere jeweils mit den entsprechenden Kontaktflächen 13 der Heizflächen 10 elektrisch verbunden, sodass die Heizflächen 10 und die Heizflächen der zweiten Heizplatte 20 elektrisch parallelgeschaltet sind. Hierbei ist eine Durchkontaktierung der zweiten Heizplatte 20 nicht erforderlich, was deren Herstellungskosten senkt.

In Fign. 3a, 3b liegt das Gehäuse 3 mit einer geschlossenen Gehäuseplatte **23** an der ersten Heizplatte 4 an, so dass der Innenraum 6 nunmehr zur ersten Heizplatte 4 hin geschlossen ist. Der Kristall 2 ist mittels des Federelements 15 in Anlage an die Gehäuseplatte 23 gedrückt und wird durch die Gehäuseplatte 23 direkt erwärmt. Das Federelement 15 ist dabei an dem Gehäuseboden 3b abgestützt. Die Sensorfläche 11 liegt nunmehr an der Gehäuseplatte 23 an, so dass die Temperatur des Kristalls 2 nur noch mittelbar über die Temperatur der Gehäuseplatte 23 gemessen wird. Die über die Heizflächen 10 der Heizplatten 4, 20 außen in das Gehäuse 3 eingebrachte Heizleistung wird durch die Gehäuseplatte 23 homogener verteilt, was einerseits den Temperaturgradienten in der Gehäuseplatte 23 minimiert und andererseits einen gegen Wärmefluktuationen unempfindlicheren Wärmepuffer für den Kristall 2 ausbildet. Statt wie im gezeigten Ausführungsbeispiel als separate Platte kann die Gehäuseplatte 23 auch als eine insbesondere mit dem Gehäuse 3 einstückig ausgebildete Gehäusedecke ausgebildet sein.

Anstelle des in den gezeigten Ausführungsformen gezeigten einen Kristalls 2 können in dem Gehäuse 3 auch mehrere optische Kristalle 2 angeordnet sein, und zwar entweder im Strahlengang des gleichen Laserstrahls hintereinander, um dadurch eine kaskadierte Frequenzkonversion der Laserwellenlänge zu erreichen, oder nebeneinander für die Frequenzkonversion unterschiedlicher Laserstrahlen. Die Heizplatte(n) 4, 20 weisen jeweils Heiz- und Sensorflächen für jeden der Kristalle 2 auf, die dann auf die gleiche Betriebstemperatur oder auf unterschiedliche Betriebstemperaturen erwärmt werden können.

Es können auch mehrere Heizvorrichtungen 1 im Strahlengang des Laserstrahls hintereinander angeordnet sein, um so eine kaskadierte Frequenzkonversion der Laserwellenlänge zu erreichen. Die Temperaturen der Kristalle 2 in den einzelnen Heizvorrichtungen 1 können auf die gleiche oder unterschiedliche Betriebstemperaturen eingestellt werden.

Optional kann eine nicht bildlich dargestellte Außenhülle, beispielsweise aus Aluminium, vorgesehen sein, die das Gehäuse 3 derart umhüllt, dass dieses gegenüber der Umgebung thermisch isoliert ist. Eine solche Außenhülle kann als einseitig offener Hohlkörper ausgebildet sein, der mit der offenen Seite an einem oberen Ende des Basiselements 5, beispielsweise an einem bildlich nicht dargestellten Flansch, angeordnet ist und sich über das Gehäuse 3 erstreckt.

Wie in den Fign. 1 bis 3 gezeigt, weist die Heizplatte 4 noch zwei zusätzliche Löcher **24** für Befestigungsschrauben auf, die sich durch nicht gezeigte Durchgangslöcher im Gehäuse 3 erstrecken, um eine vormontierte Baugruppe, bestehend aus Heizplatte 4 und Gehäuse 3, an dem Basiselement 5 zu montieren.

## Patentansprüche

1. Heizvorrichtung (1) zum Heizen eines optischen Kristalls, aufweisend einen optischen Kristall (2), ein Gehäuse (3) mit einem Innenraum (6), in dem der Kristall (2) angeordnet ist, und mit zwei einander gegenüberliegenden, seitlichen Zugangsöffnungen (7a, 7b) zu dem Innenraum (6), und eine Heizplatte (4) mit einer an einer Gehäuseseite (3a) anliegenden Plattenseite (4a), welche mindestens eine freiliegende Heizfläche (10) zur unmittelbaren Anlage an dem Gehäuse (3) und eine freiliegende Sensorfläche (11) zur Temperaturmessung des Kristalls (2) aufweist,
**dadurch gekennzeichnet,**
**dass** die Heizplatte (4) mehrere freiliegende Heizflächen (10) aufweist, die außen um die Sensorfläche (11) herum oder seitlich der Sensorfläche (11) angeordnet sind.

2. Heizvorrichtung nach Anspruch 1, **dadurch gekennzeichnet, dass** die freiliegenden Heizflächen (10) punktsymmetrisch außen um die Sensorfläche (11) herum oder seitlich der Sensorfläche (11) angeordnet sind.

3. Heizvorrichtung nach Anspruch 1 oder 2, **dadurch gekennzeichnet, dass** der Innenraum (6) zu der Heizplatte (4) hin offen ist.

4. Heizvorrichtung nach Anspruch 1 oder 2, **dadurch gekennzeichnet, dass** das Gehäuse (3) mit einer Gehäuseplatte (23) an der Heizplatte (4) anliegt.

5. Heizvorrichtung nach einem der vorhergehenden Ansprüche, **dadurch gekennzeichnet, dass** der Kristall (2), insbesondere durch ein Federelement (15), in Anlage an die Heizplatte (4), insbesondere an die Sensorfläche (11), oder in Anlage an die Gehäuseplatte (23) gedrückt ist.

6. Heizvorrichtung nach Anspruch 5, **dadurch gekennzeichnet, dass** das Federelement (15) an einem Gehäuseboden (3b) abgestützt ist.

7. Heizvorrichtung nach einem der vorhergehenden Ansprüche, **dadurch gekennzeichnet, dass** die Heizplatte (4) an das Gehäuse (3) angeschraubt ist.

8. Heizvorrichtung nach einem der vorhergehenden Ansprüche, **dadurch gekennzeichnet, dass** das Gehäuse (3) zwischen der Heizplatte (4) und einem Basiselement (5) angeordnet ist und insbesondere an das Basiselement (5) angeschraubt ist.

9. Heizvorrichtung nach einem der vorhergehenden Ansprüche, **dadurch gekennzeichnet, dass** die Heizplatte (4) einen außerhalb des Innenraums (6) angeordneten, insbesondere seitlich über das Gehäuse (3) vorstehenden, Plattenabschnitt (12) mit freiliegenden Kontaktflächen (13) aufweist, welche mit der mindestens einen Heizfläche (10) und mit der Sensorfläche (11) elektrisch leitend verbunden sind.

10. Heizvorrichtung nach einem der vorhergehenden Ansprüche, **dadurch gekennzeichnet, dass** an einer der Heizplatte (4) gegenüberliegenden Gehäuseseite eine weitere, zweite Heizplatte (20) anliegt, die mindestens eine freiliegende Heizfläche zur unmittelbaren Anlage an dem Gehäuse (3) und zugehörige freiliegende Kontaktflächen aufweist.

11. Heizvorrichtung nach Anspruch 9 oder 10, **dadurch gekennzeichnet, dass** die freiliegenden Kontaktflächen (13) der ersten und/oder zweiten Heizplatte (4; 20) von Federkontakten (16; 21), welche anderenends an einem Gegenlager (17) abgestützt sind, elektrisch kontaktiert sind.

12. Heizvorrichtung nach einem der vorhergehenden Ansprüche, **dadurch gekennzeichnet, dass** die mindestens eine Heizfläche (10) und/oder die Sensorfläche (11) und/oder die freiliegenden Kontaktflächen (13) auf der Plattenseite (4a) aufgedampft oder aufgedruckt sind.

13. Heizvorrichtung nach einem der vorhergehenden Ansprüche, **dadurch gekennzeichnet, dass** in dem Innenraum (6) mehrere optische Kristalle (2) hintereinander oder nebeneinander angeordnet sind.

14. Heizvorrichtung nach einem der vorhergehenden Ansprüche, **gekennzeichnet durch** eine Außenhülle, die das Gehäuse (3) zur thermischen Isolierung gegenüber der Umgebung umhüllt.

15. Anordnung mit mehreren hintereinander angeordneten Heizvorrichtungen (1) nach einem der vorhergehenden Ansprüche.

## Claims

1. Heating device (1) for heating an optical crystal, comprising an optical crystal (2), a housing (3) having an inner space (6) in which the crystal (2) is arranged and having two opposing lateral access openings (7a, 7b) to the inner space (6) and comprising a heating plate (4) having a plate side (4a) abutting a housing side (3a), the plate side having at least one exposed heating surface (10) for direct abutment against the housing (3) and an exposed sensor surface (11) for temperature measurement of the crystal (2),
**characterized in that**
the heating plate (4) has a plurality of exposed heating surfaces (10) which are arranged externally around the sensor surface (11) or on the side of the sensor surface (11).

2. Heating device according to claim 1, **characterized in that** the exposed heating surfaces (10) are arranged point-symmetrically externally around the sensor surface (11) or on the side of the sensor surface (11).

3. Heating device according to claim 1 or 2, **characterized in that** the inner space (6) is open towards the heating plate (4).

4. Heating device according to claim 1 or 2, **characterized in that** the housing (3) rests with a housing plate (23) against the heating plate (4).

5. Heating device according to one of the preceding claims, **characterized in that** the crystal (2) is pressed, in particular by a spring element (15), into abutment with the heating plate (4), in particular with the sensor surface (11), or into abutment with the housing plate (23).

6. Heating device according to claim 5, **characterized in that** the spring element (15) is supported on a housing base (3b).

7. Heating device according to one of the preceding claims, **characterized in that** the heating plate (4) is screwed to the housing (3).

8. Heating device according to one of the preceding claims, **characterized in that** the housing (3) is arranged between the heating plate (4) and a base element (5) and is in particular screwed to the base element (5).

9. Heating device according to one of the preceding claims, **characterized in that** the heating plate (4) has a plate section (12), which is arranged outside of the inner space (6), in particular projects laterally past the housing (3) and has exposed contact surfaces (13) which are electrically conductively connected to the at least one heating surface (10) and to the sensor surface (11).

10. Heating device according to one of the preceding claims, **characterized in that** a further, second heating plate (20) rests against a housing side opposite the heating plate (4), which second heating plate (20) has at least one exposed heating surface for direct abutment against the housing (3) and associated exposed contact surfaces.

11. Heating device according to claim 9 or 10, **characterized in that** the exposed contact surfaces (13) of the first and/or second heating plate (4; 20) are electrically contacted by spring contacts (16; 21), the other ends of which are supported on a counter-bearing (17).

12. Heating device according to one of the preceding claims, **characterized in that** the at least one heating surface (10) and/or the sensor surface (11) and/or the exposed contact surfaces (13) are vapor-deposited or printed on the plate side (4a).

13. Heating device according to one of the preceding claims, **characterized in that** several optical crystals (2) are arranged in the inner space (6) one behind the other or next to each other.

14. Heating device according to one of the preceding claims, **characterized by** an outer shell which encloses the housing (3) for thermal insulation from the environment.

15. Arrangement comprising a plurality of heating devices (1) according to any one of the preceding claims which are arranged one behind the other.

## Revendications

1. Dispositif de chauffage (1) conçu pour chauffer un cristal optique (2), comprenant un cristal optique (2), un boîtier (3) comportant un espace interne (6) dans lequel ledit cristal (2) est logé, et deux orifices latéraux mutuellement opposés (7a, 7b) offrant accès audit espace interne (6), et une platine chauffante (4) présentant une face (4a) en applique contre une face (3a) du boîtier, pourvue d'au moins une surface libre chauffante (10) destinée à venir directement en applique contre ledit boîtier (3), et d'une surface libre détectrice (11) dévolue à la mesure de la température dudit cristal (2), **caractérisé par le fait**
**que** la platine chauffante (4) compte plusieurs surfaces libres chauffantes (10) agencées extérieurement, tout autour de la surface détectrice (11), ou latéralement par rapport à ladite surface détectrice (11).

2. Dispositif de chauffage selon la revendication 1, **caractérisé par le fait que** les surfaces libres chauffantes (10) sont agencées, avec symétrie ponctuelle, extérieurement tout autour de la surface détectrice (11) ou latéralement par rapport à ladite surface détectrice (11).

3. Dispositif de chauffage selon la revendication 1 ou 2, **caractérisé par le fait que** l'espace interne (6) est ouvert en direction de la platine chauffante (4).

4. Dispositif de chauffage selon la revendication 1 ou 2, **caractérisé par le fait que** le boîtier (3) est en applique contre la platine chauffante (4) à l'aide d'une plaque (23).

5. Dispositif de chauffage selon l'une des revendications précédentes, **caractérisé par le fait que** le cristal (2) est pressé, notamment par l'intermédiaire d'un élément élastique (15), pour venir en applique contre la platine chauffante (4), en particulier contre la surface détectrice (11), ou en applique contre la plaque (23) du boîtier.

6. Dispositif de chauffage selon la revendication 5, **caractérisé par le fait que** l'élément élastique (15) est en appui contre un fond (3b) du boîtier.

7. Dispositif de chauffage selon l'une des revendications précédentes, **caractérisé par le fait que** la platine chauffante (4) est rapportée par vissage sur le boîtier (3).

8. Dispositif de chauffage selon l'une des revendications précédentes, **caractérisé par le fait que** le boîtier (3) est interposé entre la platine chauffante (4) et un élément d'embase (5), et est notamment rapporté par vissage sur ledit élément d'embase (5).

9. Dispositif de chauffage selon l'une des revendications précédentes, **caractérisé par le fait que** la platine chauffante (4) présente une région (12) située à l'extérieur de l'espace interne (6), faisant notamment saillie au-delà du boîtier (3) dans le sens latéral, et dotée de surfaces libres de contact (13) en liaison électriquement conductrice avec la surface chauffante (10), à présence minimale, et avec la surface détectrice (11).

10. Dispositif de chauffage selon l'une des revendications précédentes, **caractérisé par le fait qu'**une seconde platine chauffante (20) supplémentaire est en applique contre une face du boîtier pointant à l'opposé de la platine chauffante (4), et est munie d'au moins une surface libre chauffante destinée à venir directement en applique contre ledit boîtier (3), et de surfaces libres de contact associées.

11. Dispositif de chauffage selon la revendication 9 ou 10, **caractérisé par le fait que** les surfaces libres de contact (13) de la (des) première et/ou seconde platine(s) chauffante(s) (4 ; 20) sont mises électriquement en contact avec des contacts élastiques (16 ; 21) prenant appui sur une contre-butée (17) par l'autre extrémité.

12. Dispositif de chauffage selon l'une des revendications précédentes, **caractérisé par le fait que** la surface chauffante (10) à présence minimale et/ou la surface détectrice (11), et/ou les surfaces libres de contact (13), est (sont) vaporisée(s) ou imprimée(s) sur la face (4a) de la platine.

13. Dispositif de chauffage selon l'une des revendications précédentes, **caractérisé par le fait que** plusieurs cristaux optiques (2) sont agencés en succession ou en juxtaposition dans l'espace interne (6).

14. Dispositif de chauffage selon l'une des revendications précédentes, **caractérisé par** une enveloppe extérieure entourant le boîtier (3), en vue de l'isolation thermique par rapport à l'espace environnant.

15. Ensemble comprenant plusieurs dispositifs de chauffage (1) conformes à l'une des revendications précédentes, agencés en succession mutuelle.
